# EUROPÄISCHE PATENTSCHRIFT

(11) **EP 2 004 354 B1**
(45) Veröffentlichungstag und Bekanntmachung des Hinweises auf die Patenterteilung: **03.06.2009**
(21) Anmeldenummer: 07722190.1
(22) Anmeldetag: 11.04.2007
(51) Int. Cl.: B23C 5/00, B23C 5/24

(54) **SCHNEIDENTRÄGER UND FRÄSMESSERKOPF**
CUTTER SUPPORT AND CUTTER HEAD
PORTE-LAMES ET TÊTE DE FRAISAGE

(30) Priorität: 12.04.2006 DE 202006006081 U
(43) Veröffentlichungstag der Anmeldung: 24.12.2008
(73) Patentinhaber: Kennametal Widia Produktions GmbH & Co. KG, 45145 Essen (DE)
(72) Erfinder: HEINLOTH, Markus, 92353 Postbauer-Heng (DE); KLÖTZER, Ralf, 98704 Langewiesen (DE); KLEIN, Helmut, 91183 Abenberg (DE)
(74) Vertreter: Vomberg, Friedhelm
(86) Internationale Anmeldenummer: PCT/DE2007/000632
(87) Internationale Veröffentlichungsnummer: WO 2007/115561

(56) Entgegenhaltungen:
- EP-A1- 1 231 004
- DE-A1- 4 003 862
- DE-C1- 10 006 431

## Beschreibung

Die Erfindung betrifft einen Schneidenträger zur Befestigung in einem Fräsmesserkopf, bestehend aus einem schaftförmigen Stift und einem Kopf mit eingelöteten Schneiden mit einer von einer Spanfläche und einer Freifläche gebildeten Nebenschneidkante.

Die Erfindung betrifft ferner einen Fräsmesserkopf mit mehreren, in Ausnehmungen eines Grundkörpers eingesetzten Schneidenträgern, auf die jeweils Schneiden aufgelötet sind, wobei die Schneidenträger jeweils über einen Keilkörper axial verstellbar und mittels-Klemmelementen im Fräsmesserkopf fixierbar sind.

Der vorbeschriebene Fräsmesserkopf ist prinzipiell aus der DE 40 03 862 bekannt. Die Ausnehmungen für die Schneidenträger erstrecken sich bei dem dort beschriebenen Messerkopf von der einen Stirnfläche seines Grundkörpers parallel zu dessen Drehachse sowie im Abstand vom Umfang, wobei die Schneiden der verwendeten Schneidplatten nur wenig über die Stirnfläche des Grundkörpers vorstehen. Ferner stehen die Achse der zum Verspannen dienenden Rundkeile jeweils windschief zu den Achsen der die Schneidplatten tragenden Schneidplattenträger. Schließlich ist auch noch jeweils ein weiterer Rundkeil mit Differentialschraube zur axialen Einstellung einer jeden Schneidplatte vorgesehen und in einer Ausnehmung angeordnet, die sich vom Umfang des Grundkörpers radial einwärts erstreckt. Zur axialen Einstellung und zum radial auswärts gerichteten Verspannen werden geometrisch gleiche Rundkeile verwendet. Als Vorteil dieses Messerkopfes wird hervorgehoben, dass aufgrund der Lage der die Schneidplattenträger aufnehmenden Ausnehmungen parallel zur Drehachse des Grundkörpers nur radial gerichtete Fliehkräfte ohne Axialkomponenten auftreten. Diese Kräfte lassen sich gut abfangen, weil sich die Ausnehmungen nicht unmittelbar am Umfang des Grundkörpers, sondern radial einwärts im Abstand vom Umfang befinden. Der Messerkopf ist daher auch für extrem hohe Drehzahlen und die dann auftretenden Fliehkräfte geeignet. Vorteilhafter Weise ist eine Feineinstellung der Schneidelemente in axialer Richtung ohne Überlagerung mit radialen Komponenten möglich.

Während nach dem Stand der Technik Kurbelwellen für Pkw durch Schleifen bzw. Bandschleifen einer Finish-Bearbeitung zugeführt worden sind, wobei das Schleifen verfahrensbedingt unter Einsatz von Kühlschmierstoffen durchgeführt wurde, konnte mit der Entwicklung geeigneter Fräserwerkzeuge das Schleifen der Kurbelwellen durch Fräsverfahren abgelöst werden. Aufgrund der Bauform der Kurbelwelle wird ein orthogonales Drehfräsen mit exzentrischer Werkzeuganstellung ohne Axialvorschub angewendet. Hierbei führt das Werkzeug eine Senkbewegung aus, aufgrund der die Formgestaltung der Lagersitze ausschließlich durch die Werkzeugnebenschneide erzeugt wird. Hierbei muss das Werkzeug so zum Werkstück angestellt werden, dass sichergestellt ist, dass während des Eingriffes der Nebenschneide die gesamte Scheitellinie des Lagersitzes überdeckt wird. Der zu fertigende Lagersitzdurchmesser wird über diese Scheitellinie erzeugt. Verfahrensbedingt sind mittlere Bereiche der Nebenschneide länger im Eingriff als andere Bereiche. Dies führt dazu, dass die Schneide im mittleren Bereich einen höheren Verschleiß als in den äußeren Bereichen zeigt.

Weitere Details über das orthogonale Drehfräsen sind beispielsweise in der DE 10 2004 022 360 A1 beschrieben. Das orthogonale Drehfräsen mit exzentrischer Werkzeuganstellung ohne Axialvorschub hat jedoch einen entscheidenden Nachteil. Aufgrund der Tatsache, dass bei diesem Verfahren die Werkzeugnebenschneide eine Senkoperation ausführt, wirken sich kleinste Schneidenfehler bzw. der Werkzeugverschleiß sofort negativ auf die zu erreichende Form und Oberflächengüte aus. Vor allem der sich unterschiedlich ausbildende Werkzeugverschleiß führt zu einer früheren Formabweichung.

Es ist Aufgabe der vorliegenden Erfindung, die vorgenannten Nachteile zu beseitigen, insbesondere soll eine Schneidenform gefunden werden, die gleichzeitig eine formgenaue Werkstückbearbeitung als auch eine möglichst lange Standzeit gewährleistet.

Ferner ist es Aufgabe der vorliegenden Erfindung, hierzu einen geeigneten Fräsmesserkopf anzugeben.

Die erstgenannte Aufgabe wird durch einen Schneidenträger nach Anspruch 1 gelöst. Der Schneidenträger besitzt erfindungsgemäß eine an die Nebenschneidkante angrenzende und auf der Freifläche angeordnete Fase mit einer nach außen jeweils zu 0 abnehmenden Fasenbreite. Weitere Ausführungsformen des Schneidenträgers sind in den Unteransprüchen beschrieben.

Die Aufgabe wird ferner durch einen Fräsmesserkopf nach Anspruch 10 gelöst, der durch drei Schneidenträger gekennzeichnet ist, die in äquidistantem Winkelmaß zueinander angeordnet sind.

Bei den nach dem Stand der Technik bekannten Schneidenträgern ohne die erfindungsgemäße Fase ergab sich ein hoher Anfangsverschleiß in der Schneidenmitte, nämlich dem Ort, an dem die Schneide die längste Kontaktzeit mit dem Werkstück hat. Randseitig liegende Bereiche mit wesentlich kürzerem Schneideingriff zeigten hingegen einen geringeren Freiflächenverschleiß. Bei Verwendung der erfindungsgemäßen Schneidenträger konnte hingegen der degressive Verschleißbereich mit einem hohen anfänglichen Freiflächenverschleiß deutlich verkürzt werden, so dass der Bereich, in dem der Freiflächenverschleiß linear stattfindet, entsprechend verlängert wurde.

Weitere Details der Erfindung werden anhand der Figuren erläutert. Es zeigen:
- Fig. 1: eine perspektivische Ansicht eines Fräsmesserkopfes mit 3 Schneidenträgern,
- Fig. 2: eine drahtmodellartige Darstellung des Fräsmesserkopfes nach Fig. 1,
- Fig. 3: einen Längsquerschnitt durch einen Fräsmesserkopf ohne Schneidenträger,
- Fig. 4: eine Seitenansicht eines Schneidenträgers,
- Fig. 5: eine Prinzipsskizze der relativen Lage eines Schneidenträgers zu einem Klemmstück und einem Keilkörper zur axialen Einstellung,
- Fig. 6: eine weitere Seitenansicht des Schneidenträgers,
- Fig. 7: eine Ausschnittsvergrößerung des Bereiches "A",
- Fig. 8+9: jeweilige vergrößerte Ansichten der Schneiden gemäß Fig. 4 in unterschiedlichen Ausführungsformen,
- Fig. 10: eine Draufsicht auf die Freifläche der Schneide und
- Fig. 11: eine schematische Verschleißkurve.

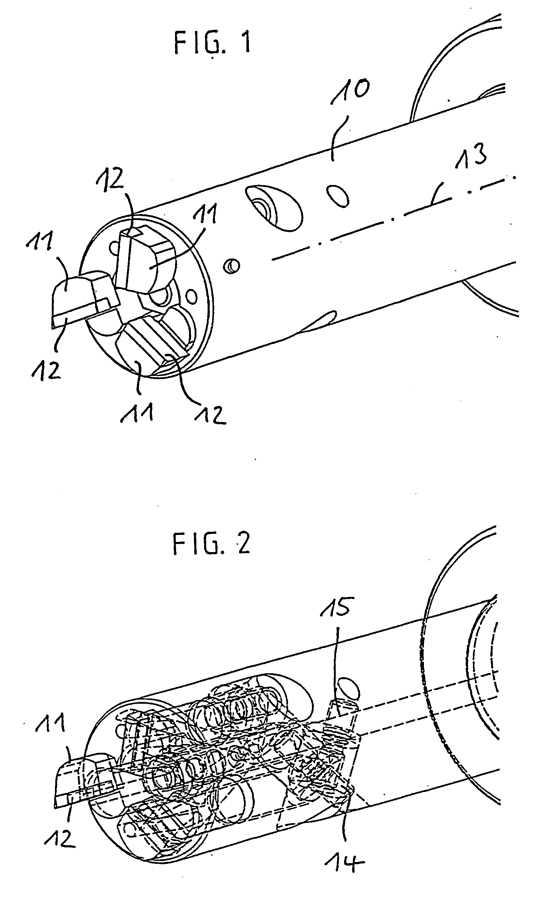

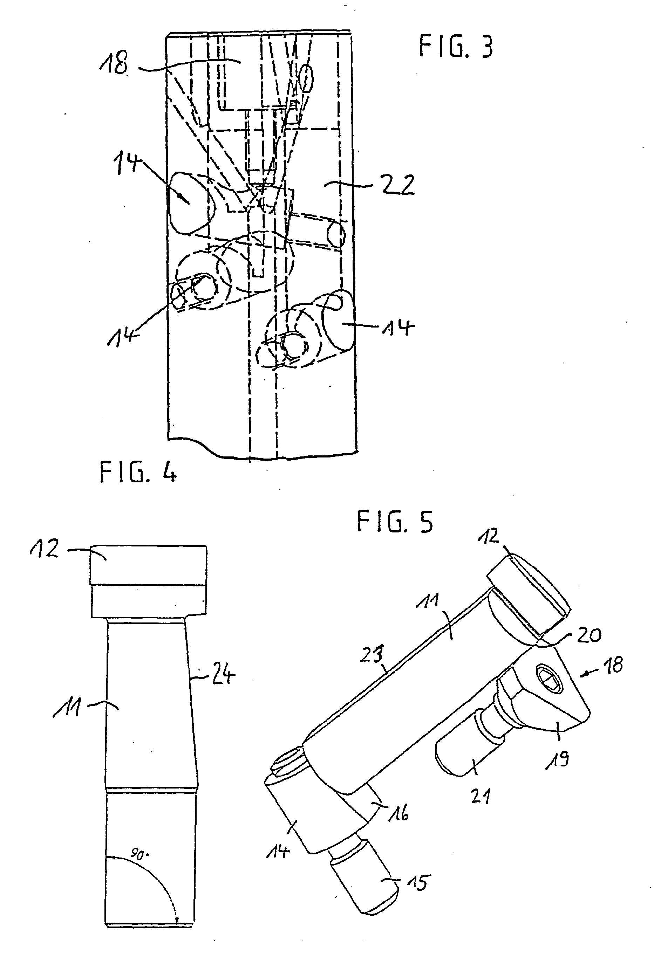

Der in Fig. 1 bis 3 dargestellte Fräsmesserkopf besteht im Wesentlichen aus einem Grundkörper 10, in dem drei Schneidenträger 11 mit jeweils aufgelöteten Schneiden 12 aufgelötet sind. Die Schneidenträger 11 sind jeweils in parallel zur Längsachse 13 angeordneten Bohrungen 22 (siehe Fig. 3) eingesetzt. Im Wesentlichen in radialer Richtung bzw. leicht hierzu geneigt sind weitere Bohrungen im Grundkörper 10 vorgesehen, in denen Keilkörper 14 angeordnet sind, die über eine Justierschraube 15, vorzugsweise eine Doppelgewindeschraube, in radialer Richtung verschiebbar sind.

Wie aus Fig. 5 ersichtlich, besitzen die Keilkörper 14 Keilflächen 16, die schräg zur Radialebene des Grundkörpers verlaufen, so dass bei einer Radialbewegung des Keilkörpers 14 der Schneidenträger 11 entlang seiner Längsachse, d. h. in axialer Richtung, verschiebbar ist. Zur Klemmung der Schneidenträger dient das Klemmstück 18, das mittig angeordnet ist und drei Klemmflächen 19 aufweist, die an entsprechenden Klemmflächen der Schneidenträger 11 anliegen. Das Klemmstück 18 kann mittels einer Schraube 21, die vorzugsweise als Doppelgewindeschraube ausgebildet ist, fixiert werden. Das Klemmstück 18 dient im dargestellten Fall zur Fixierung von drei Schneidenträgern 11, die jeweils eine ebene Fläche 20 aufweisen. Durch die Ausbildung des Klemmstückes 18 und die Anordnung der Klemmflächen 19 in einer Triangelform wird ein exaktes Ausrichten der Schneiden 12 und der Schneidenträger 11 unter einem Winkel von 120° zueinander (siehe Fig. 1) erreicht. Jeder Schneidenträger 11 kann über einen Rundkeil und die dazugehörige Schraube 15 axial verstellt werden. Zur achsparallelen Ausrichtung der Schneidenträger und damit der Schneiden dienen die Bohrungen 22. Die Fläche 23 dient dazu, dass sichergestellt wird, dass es zu keiner Linienberührung zwischen Schneidenträger 11 und Bohrung 22 kommt. Wie in Fig. 4 dargestellt, besitzt der Schneidenträger 11 auch eine geneigte Fläche 24, deren Neigung der Neigung einer Fläche 19 des Klemmstückes entspricht.

Alternativ ist es möglich, anstelle der passgenauen Bohrungen einen außen liegenden Spannring in Verbindung mit einem axial mittig angeordneten Klemmstück zu verwenden, zwischen denen die Schneidenträger 11 fixierbar sind. Der Spannring wird dann auf den Grundkörper 10 aufgeschraubt oder aufgeschrumpft.

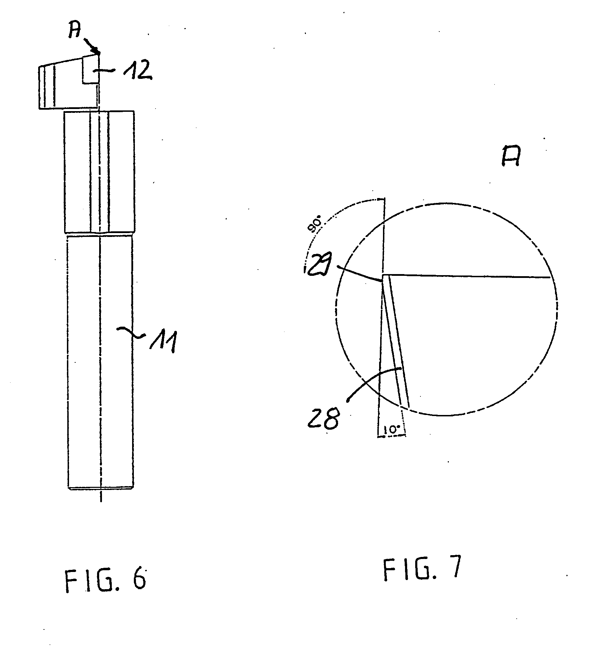

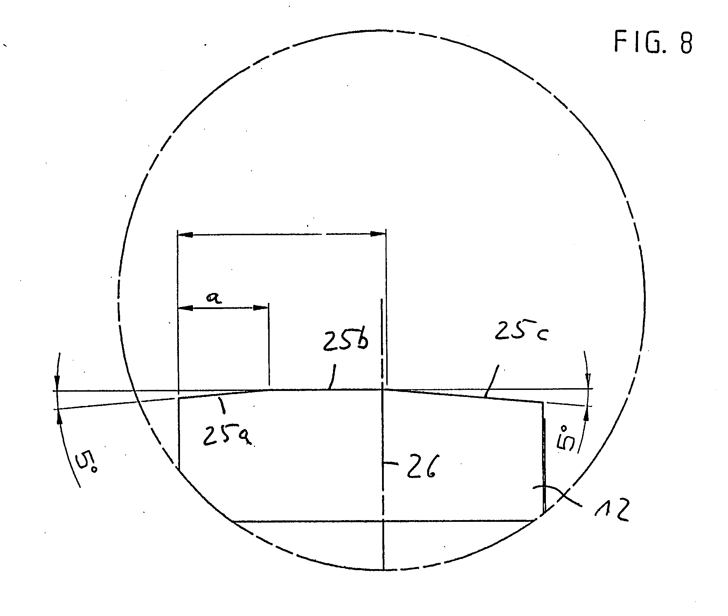

Details der vorliegenden Erfindung zeigen insbesondere die Fig. 7, 9 und 10, die vergrößerte Ansichten der Schneiden bzw. der Schneidenherstellung zeigen; Fig. 8 zeigt eine optionale Ausführungsform, bei der der innere und der äußere Schneidenbereich gegenüber dem mittleren Schneidenbereich abgewinkelt sind.

Die als Vorverschleißfase dienende Fase 29 hat die Aufgabe, das für das Verfahren charakteristische Verschleißbild unter Berücksichtigung des erforderlichen konkav nach innen verlaufenden Schneidensturzes nachzubilden. Somit wird der degressive Verschleißverlauf verkürzt. Man setzt sozusagen gleich im linearen Verschleißbereich ein. Würde man keine Vorverschleißfase unter Berücksichtigung des erforderlichen konkav nach innen verlaufenden Schneidensturzes auf die Schneide schleifen, käme es zu einer Formabweichung bereits im degressiven Verschleißbereich und somit zum Standzeitende durch Formabweichung.

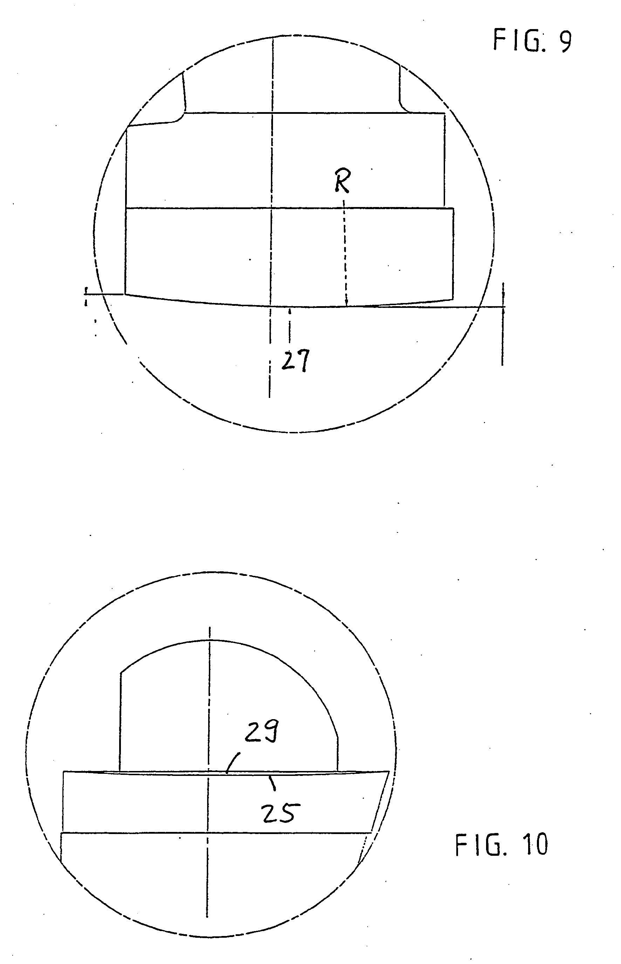

Um zu der erfindungsgemäßen Schneidenform zu gelangen, wird die Freifläche der Schneide 25 unter Beibehaltung des Freiwinkels entweder (bei großen Radien und kurzen Schneidenlängen) dachförmig angeschliffen oder wie in Fig. 9 dargestellt, konvex unter einem Radius R geschliffen, der vorzugsweise etwa 900 mm beträgt.

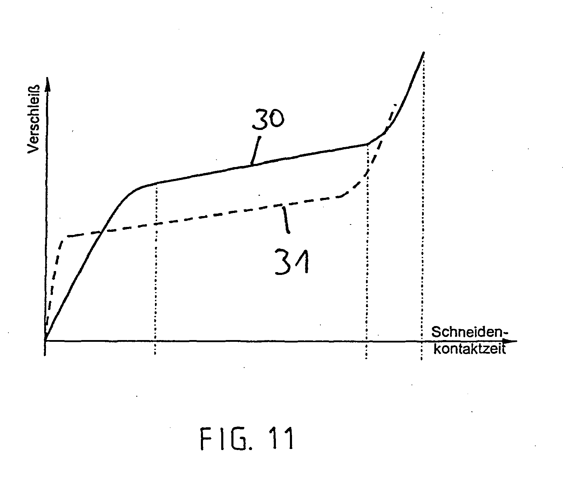

Durch die Ausbildung nach Fig. 9 ergibt sich ein Abstand des höchsten Punktes 27 der Schneide gegenüber dem niedrigsten Punkt von 4 µm. Wird in einem zweiten Arbeitsgang eine Fase 29 auf die Freifläche 28 geschliffen, wobei der Sturzwinkel der Schneide beibehalten wird, ergibt sich die in Fig. 10 dargestellte Ausführungsform der Fase, die etwa mittig der Schneide 25 die größte Breite von 4 µm aufweist. Die Fase erstreckt sich bis zu den Enden der Schneidkante 25 bzw. zu einem kurz davor endenden Ort, wobei die Fase 29 kontinuierlich schmaler bis zu einer Breite von 0 mm an beiden Seiten ausläuft. Die Fase ergibt sich somit aus einem sehnenartigen Schnitt einer dachförmigen oder konvex ausgebildeten Freifläche, die unter einem Freiwinkel von 10° angeordnet ist. Der Spanwinkel beträgt einheitlich 0°. Die Schneiden 12 sind unter einem Sturzwinkel von 90° bzw. einem geringfügig kleineren Winkel zur Rotationsachse des Werkzeugs konkav geschliffen, wodurch sich die 4 µm große Erhöhung des Punktes 27 ergibt. Durch diese Maßnahme wird erreicht, dass anstelle des Verschleißverlaufes gemäß Kurve 30 in Fig. 11, der sich bei nach dem Stand der Technik bekannten Schneidenträgern ergibt, ein Verschleißverlauf 31 erreicht wird, bei dem der lineare Verschleißbereich erheblich verlängert worden ist, indem der degressive Anfangsverschleißbereich um eine entsprechende Zeit verkürzt wird.

In der in Fig. 8 dargestellten Ausführungsvariante erstreckt sich über eine Breite a von 2 mm ein um 5° abgewinkelter Nebenschneidenteil, dem ein Nebenschneidenteil 25b folgt, der senkrecht zur Längsachse 26, die parallel zu der Drehachse 13 liegt, angeordnet ist. Auf der innen liegenden Seite folgt ein Nebenschneidenteil 25c, das ebenfalls um 5° geneigt ist.

Durch die gemäß Fig. 8 ggf. zusätzlich gewählte Ausbildung abgewinkelter Außenbereiche (Twinkappung) von einer mit Vorverschleißfase präparierten Schneide werden bewusst der innere und der äußere Schneidenbereich aus dem Schneidenkontaktbereich herausgenommen. Bei den beiden nicht mit "Twinkappung" versehenen Schneiden kommt es in diesen Bereichen zu seinem höheren Freiflächenverschleiß. Im mittleren Schneidenbereich, wo verfahrensbedingt der höchste Freiflächenbereich auftritt, schneiden alle drei Schneiden zusammen. Man nutzt das Verschleißverhalten sozusagen zugunsten der geforderten konvexen Kurbelwellenlagerform aus.

## Patentansprüche

1. Schneidenträger zur Befestigung in einem Fräsmesserkopf, bestehend aus einem schaftförmigen Stift und einem Kopf mit eingelöteten Schneiden mit einer von einer Spanfläche und einer Freifläche gebildeten Nebenschneidkante (25),
**gekennzeichnet durch**
eine an die Nebenschneidkante (25) angrenzende und auf der Freifläche angeordnete Fase (29) mit einer nach außen jeweils zu 0 abnehmenden Fasenbreite.

2. Schneidenträger nach Anspruch 1, **dadurch gekennzeichnet, dass** die Fase (29) etwa mittig zur Nebenschneidkante (25) angeordnet ist.

3. Schneidenträger nach Anspruch 1 oder 2, **dadurch gekennzeichnet, dass** die maximale Fasenbreite ≤10 µm, vorzugsweise ≤4 µm beträgt.

4. Schneidenträger nach einem der Ansprüche 1 bis 3, **dadurch gekennzeichnet, dass** die Fasenbreite zu beiden Seiten kontinuierlich zu 0 µm abnimmt und/oder sich die Fase (29) über die gesamte Nebenschneidenbreite erstreckt.

5. Schneidenträger nach einem der Ansprüche 1 bis 4, **dadurch gekennzeichnet, dass** die Fase (29) durch zwei aufeinander folgende Schleifoperationen hergestellt wird, nämlich einem ersten Schleifen des an die Schneidkante angrenzenden Freiflächenbereiches (28) zu einer konvexen oder dachartigen Form und einem anschließenden teilweisen Planschliff dieses Freiflächenbereiches.

6. Schneidenträger nach Anspruch 5, **dadurch gekennzeichnet, dass** der Radius des konvex geschliffenen Freiflächenbereiches R = 900 mm ± 100 mm beträgt.

7. Schneidenträger nach einem der Ansprüche 1 bis 6, **dadurch gekennzeichnet, dass** der Freiwinkel 10° ± 2° beträgt.

8. Schneidenträger nach Anspruch 5 **gekennzeichnet durch** eine abgewinkelte Schneide, wobei ein mittlerer Schneidenteil (25b) senkrecht zur Stiftlängsachse und die sich seitlich hieran anschließenden Schneidenteilbereiche (25a, 25c) hierzu unter einem Winkel ≤10°, vorzugsweise ≤5° geneigt sind.

9. Schneidenträger nach Anspruch 8, **dadurch gekennzeichnet, dass** das Verhältnis der Länge des radial außen liegenden abgewinkelten Schneidenteilbereiches (25a) zum mittleren Schneidenteilbereich (25b) 2:3 und/oder das Verhältnis der Länge des radial innen liegenden abgewinkelten Schneidenteilbereiches (25c) zum radial außen liegenden Nebenschneidenteilbereich (25a) 2:1 beträgt.

10. Fräsmesserkopf mit mehreren in Ausnehmungen eines Grundkörpers eingesetzten Schneidenträgern, auf die jeweils Schneiden aufgelötet sind, wobei die Schneidenträger jeweils über einen Keilkörper axial verstellbar und mittels Klemmelementen im Fräsmesserkopf fixierbar sind,
**gekennzeichnet durch**
zwei Schneidenträger nach einem der Ansprüche 1 bis 9, die in äquidistantem Winkelmaß zueinander angeordnet sind.

## Claims

1. Cutter support for fixing in a milling head, comprising a shaft-like bar and a head with brazed-on blades, the blades having a lateral cutting edge (25) formed by a rake face and a clearance face, **characterised by** a bevel (29) abutting the lateral cutting edge (25) and formed on the clearance face with a bevel width tapering down to 0 towards the peripherie.

2. Cutter support according to claim 1, **characterised in that** the bevel (29) is positioned approximately central to the lateral cutting edge (25).

3. Cutter support according to claim 1 or 2, **characterised in that** the maximum width of the bevel is ≤10 µm, preferably ≤4 µm.

4. Cutter support according to one of claims 1 to 3, **characterised in that** the bevel width continually decreases to 0 at both ends and/or the bevel (29) extends over the entire width of the lateral cutting edge.

5. Cutter support according to one of claims 1 to 4, **characterized in that** the bevel (29) is produced using two consecutive grinding operations, namely a first grinding of the clearance face region (28) adjacent the cutting edge to a convex or roof shape and a subsequent partial surface grinding of this clearance face region.

6. Cutter support according to claim 5, **characterised in that** the radius of the clearance face region ground in a convex fashion is R = 900 mm ± 100 mm.

7. Cutter support according to one of claims 1 to 6, **characterised in that** the clearance angle is 10° ± 2°.

8. Cutter support according to claim 5, **characterised by** a multisection angled blade with a central blade region (25b) extending perpendicular to the longitudinal axis of the shaft, and with the blade regions (25a, 25c) adjacent thereto being angled relative to the central blade region at an angle ≤ 10°, preferably ≤ 5 ° .

9. Cutter support according to claim 8, **characterised in that** the ratio of the length of the radially outer angled blade region (25a) to the central blade region (25b) is 2:3 and/or the ratio of the length of the radially inner angled blade region (25c) to the radially outer lateral blade region (25a) is 2:1.

10. Milling head with multiple cutter supports inserted into seats of a base body, blades being brazed onto the cutter supports, the cutter supports each being axially adjustable via a wedge and being fixable in the milling head by means of clamping elements, **characterised by** two cutter supports according to one of claims 1 to 9 set at an equidistant angle to one another.

## Revendications

1. Porte-lames pour la fixation dans une fraise à surfacer à lames amovibles, se composant d'une broche en forme de tige et d'une tête comprenant des lames brasées là-dedans qui présentent un tranchant secondaire (25) formé par une face de coupe et une face de dépouille, **caractérisé par** un chanfrein (29) contigu au tranchant secondaire (25) et disposé sur la face de dépouille et présentant une largeur de chanfrein qui diminue vers l'extérieur de manière à devenir respectivement 0.

2. Porte-lames selon la revendication 1, **caractérisé par le fait que** ledit chanfrein (29) est disposé à peu près de manière centrale par rapport au tranchant secondaire (25).

3. Porte-lames selon la revendication 1 ou 2, **caractérisé par le fait que** la largeur maximale du chanfrein est ≤ 10 µm, de préférence ≤ 4 µm.

4. Porte-lames selon l'une quelconque des revendications 1 à 3, **caractérisé par le fait que** la largeur du chanfrein diminue continûment de part et d'autre de manière à devenir 0 µm, et/ou que le chanfrein (29) s'étend sur toute la largeur du tranchant secondaire.

5. Porte-lames selon l'une quelconque des revendications 1 à 4, **caractérisé par le fait que** ledit chanfrein (29) est réalisé par deux opérations successives de rectification, à savoir par une première rectification de la zone de face de dépouille (28) contiguë au tranchant de manière à présenter donc une forme convexe ou une forme en toit et par une rectification partiellement plane subséquente de cette zone de face de dépouille.

6. Porte-lames selon la revendication 5, **caractérisé par le fait que** le rayon de la zone de face de dépouille rectifiée de manière à présenter une forme convexe est R = 900 mm ± 100 mm.

7. Porte-lames selon l'une quelconque des revendications 1 à 6, **caractérisé par le fait que** l'angle de dépouille est de 10° ± 2°.

8. Porte-lames selon la revendication 5, **caractérisé par** un tranchant coudé, une portion centrale (25b) du tranchant étant perpendiculaire à l'axe longitudinal de la broche et les portions de tranchant (25a, 25c) y contiguës étant inclinées à un angle de ≤ 10°, de préférence de ≤ 5° par rapport à cela.

9. Porte-lames selon la revendication 8, **caractérisé par** ie fait que le rapport de la longueur de la portion de tranchant inclinée (25a) située radialement à l'extérieur à la portion centrale de tranchant (25b) est de 2 à 3, et/ou que le rapport de la longueur de la portion de tranchant inclinée (25c) située radialement à l'intérieur à la portion de tranchant secondaire (25a) située radialement à l'extérieur est de 2 à 1.

10. Fraise à surfacer à lames amovibles comprenant plusieurs porte-lames qui sont insérés dans des évidements d'un corps de base et sur chacun d'eux sont brasés des lames, lesdits porte-lames pouvant chacun être réglés axialement par l'intermédiaire d'un corps en forme de coin et être fixés au moyen d'éléments de serrage dans la fraise à surfacer à lames amovibles, **caractérisée par** deux porte-lames selon l'une quelconque des revendications 1 à 9 qui sont disposés l'un par rapport l'autre à un angle équidistant.
